# EUROPÄISCHE PATENTSCHRIFT

(11) **EP 1 508 391 B1**
(45) Veröffentlichungstag und Bekanntmachung des Hinweises auf die Patenterteilung: **16.12.2009**
(21) Anmeldenummer: 04103985.0
(22) Anmeldetag: 19.08.2004
(51) Int. Cl.: B23B 31/00, B25D 17/08

(54) **Einsteckende für ein drehendes und schlagendes Werkzeug**
Shank for a rotary percussion tool
Tige pour un outil à percussion rotatif

(30) Priorität: 22.08.2003 DE 10338640
(43) Veröffentlichungstag der Anmeldung: 23.02.2005
(73) Patentinhaber: HILTI Aktiengesellschaft, 9494 Schaan (LI)
(72) Erfinder: Kleine, Werner, 28832 Achim (DE); Britten, Werner, 86899 Landsberg (DE)
(74) Vertreter: Wildi, Roland

(56) Entgegenhaltungen:
- WO-A-97/13602
- DE-A1- 2 405 938
- DE-A1- 3 413 432
- DE-A1- 4 316 799
- DE-A1- 19 604 280
- DE-A1- 19 604 283
- DE-U1- 8 433 275
- US-A- 369 248

## Beschreibung

Die Erfindung bezeichnet ein Einsteckende gemäß dem Oberbegriff des Anspruchs 1, für ein zumindest teilweise drehendes und/oder schlagendes Werkzeug, wie einen Bohrmeissel, Meissel oder Schneidbohrkrone zur Bearbeitung von Gestein, Beton oder Mauerwerk.

Eine solche Einsteckende ist aus Dokument DE-U-8433275 bekannt.

Üblicherweise weist ein drehendes und schlagendes Werkzeug beispielsweise entsprechend DE3941646A1 ein sich längs einer Achse erstreckendes Einsteckende, zylindermantelförmige Führungsflächen und zum freien Stirnende hin axial geschlossene Verriegelungsnuten und axial offene Drehmitnahmenuten auf, wobei radial versetzbare Verriegelungskörper der zugeordneten Werkzeugaufnahme in die Verriegelungsnuten eingreifen und die axiale Beweglichkeit des Werkzeugs begrenzen.

Nach der DE19604283A1 weist ein weiteres Einsteckende drei zusätzliche, sich bis zum freien Stirnende erstreckende, umfänglich zwischen Nuten angeordnete Stege auf. Die bezüglich des Durchmessers der zylindermantelförmigen Führungsflächen radial innen liegenden Drehmitnahmeflächen benötigen durch ihren geringen radialen Achsabstand hohe Kontaktflächenpressungen zur Drehmomentübertragung, wodurch diese schnell verschleissen. Durch eine spanende Einbringung derartiger Nuten in das zuvor runde Einsteckende wird zudem axial die für die Schlagübertragung verfügbare Querschnittsfläche vermindert, wodurch störende Reflexionen auftreten, die die Impulsübertragung verschlechtern.

Das Einsteckende nach der DE3413432A1 weist drei umfänglich symmetrisch verteilte, axial beidseitig geschlossene Nuten auf, die durch Umformen spanlos radial in einen Drahtrohling eingeprägt wurden und am tangentialen Nutenrand radiale Überhöhungen ausformen, wodurch der zur Drehmitnahme wirksame Aussendurchmesser des Einsteckendes etwas vergrössert werden kann, der in Form spezieller Führungsflächen zur Aufnahme von Einsteckenden unterschiedlichen Durchmessers in ein spezielles Dreibackenfutter dient. Da die Führungsflächen ausschliesslich durch die am tangentialen Nutenrand ausgebildeten Überhöhungen ausgebildet werden, sind diese für eine stark verschleissende Übertragung hoher Drehmomente ungeeignet.

Das Einsteckende nach der DE8433275U1 weist drei umfänglich symmetrisch verteilte, axial beidseitig geschlossene Nuten auf, die durch Umformen spanlos in einen Drahtrohling radial eingeprägt wurden und radiale Ausprägungen ausformen. Der zentrale Einprägewinkel ist dabei stets kleiner gleich dem zentralen Ausprägewinkel. Mit geeigneten, eine Längenausdehnung des Drahtrohlings beim Umformen unterbindenden, Umformwerkzeugen wird eine querschnittsflächengleiche Verdrängung des Materials nach radial Aussen erzielt, wodurch der zur Drehmitnahme wirksame Aussendurchmesser des Einsteckendes entsprechend vergrössert wird. Im Falle einer alternativ zugelassenen Längenausdehnung entspricht der Aussendurchmesser etwa dem des Drahtrohlings. Bei derart breit ausgeformten radialen Ausprägungen wird das bei der Umformung verfügbare Material nicht optimal zur Erhöhung der Drehmomentübertragung ausgenutzt.

Die Aufgabe der vorliegenden Erfindung besteht in der Realisierung eines Einsteckendes für ein drehendes und/oder schlagendes Werkzeug, welches hohe Drehmomente verschleissarm übertragen kann sowie ein gutes Impulsverhalten aufweist. Ein weiterer Aspekt besteht in der zeit- und materialeffizienten Fertigung von Einsteckenden.

Die Aufgabe wird im Wesentlichen durch die Merkmale des Anspruchs 1 gelöst. Vorteilhafte Weiterbildungen ergeben sich aus den Unteransprüchen.

Indem die Summendifferenz der zentralen Einprägungswinkel zumindest 15° grösser als die der zentralen Ausprägungswinkel ist, wird bei einem aus einem Drahtrohling des Radialbezugsmasses zumindest teilweise umgeformten Verriegelungsbereich durch das dabei verdrängte Material eine bezüglich eines jeweils mit dem inversen Radius gewichteten radialen Einprägungsmasses im umfänglichen Mittel ein grösseres radiales Ausprägungsmass bewirkt, welches bei einer Drehmomentübertragung auf das Werkzeug mittels eines radial Aussen an der Ausprägung angreifenden, einseitig tangentialen Zwangs zu niedrigeren Kontaktflächenpressungen und somit zu wesentlich weniger Verschleiss am Einsteckende führt.

Vorteilhaft beträgt der zentrale Einprägungswinkel der mindestens drei Einprägungen jeweils mehr als 60°, wodurch in jede dieser Einprägungen ein radial eingreifendes Verriegelungselement, insbesondere eine Verriegelungskugel, einer Werkzeugaufnahme hinreichend tief zur axialen Verriegelung eingreifen kann.

Vorteilhaft ergibt das Verhältnis der Summe der zentralen Einprägungswinkel zur Summe der zentralen Ausprägungswinkel einen Zahlenwert im Bereich von 1,2 bis 2.0, weiter vorteilhaft bezüglich jedes Ausprägungswinkels und der mindestens drei Einprägungswinkel, wodurch eine, mit einem minimalen Krümmungsradius von mindestens der Summe aus dem maximalen Ausprägungsmass und dem maximalen Einprägungsmass, nur leicht konkav gekrümmten Querschnittskontur der Einprägung ausgebildet wird, welche bezüglich einer Wechselbeanspruchung der Ausprägung bei der Drehmomentübertragung eine kleine Kerbzahl darstellt und somit Materialermüdungen im Kerbgrund vermeidet.

Vorteilhaft ergibt das Verhältnis eines jeweils bezüglich des Radialbezugsmasses bestimmten maximalen Ausprägungsmasses und maximalen Einprägungsmasses einen Zahlenwert im Bereich von 0.65 bis 1.20, optional bezüglich jeder der mindestens drei Einprägungen, wodurch bei einer derartigen Querschnittskontur ein hinreichend grosser, für die Schlagimpulsübertragung wesentlicher, axial innerer Kerndurchmesser verbleibt.

Vorteilhaft liegt das Verhältnis der Querschnittsfläche zu einer Kreisfläche des Bezugsmasses im Bereich von 0.9 bis 1.0, wodurch die Querschnittsfläche eines aus einem Drahtrohling des Radialbezugsmasses zumindest teilweise umgeformten Verriegelungsbereich längs des Einsteckendes etwa gleich bleibt und somit leistungsmindernde, zu Reflektionen der Stosswelle führende, akustische Impedanzsprünge vermieden werden.

Vorteilhaft bildet die Querschnittskontur einen glatten Übergang von der Einprägung zur Ausprägung aus, wodurch prädestinierte Anlagerungsstellen für abrasive Staubanhäufungen bzw. verschleisswirksame lokale Druckstellen für die zugeordnete Werkzeugaufnahme vermieden werden.

Vorteilhaft ist im Verriegelungsbereich umfänglich zwischen einer Einprägung und einer Ausprägung eine axial verlaufende Führungsfläche angeordnet, welche weiter vorteilhaft zylindermantelförmig ausgebildet ist, wodurch eine verschleissarme flächige Auflage zur Drehführung des Werkzeugs realisiert ist.

Vorteilhaft sind axial beidseitig zum Verriegelungsbereich angeordnete, axial verlaufende Führungsflächen vorhanden, welche optional zylindermantelförmig ausgebildet sind, wodurch verschleissarm ein hohes axiales Biegemoment auf das Werkzeug übertragbar ist. Zudem wird dadurch ein guter Rundlauf des Werkzeugs erzielt.

Vorteilhaft beträgt die axiale Länge einer zum freien Ende hin angeordneten Führungsfläche mindestens das 1.0-fache des Radialbezugsmasses, wodurch am freien Ende auch bei axialer Schlagbeanspruchung eine hinreichende axiale Dichtfläche verfügbar ist.

Vorteilhaft sind genau drei Einprägungen axial beidseitig geschlossen, wodurch jede dieser als alleinige Axialverriegelung in einer zugeordneten Werkzeugaufnahme nutzbar ist.

Vorteilhaft sind mehrere Ausprägungen vorhanden, weiter vorteilhaft genau drei, wodurch das bei zulässigen Kontaktflächenpressungen verschleissarm übertragbare Drehmoment vervielfacht wird.

Vorteilhaft sind im Querschnitt genau drei Einprägungen und genau drei Ausprägung vorhanden, wobei weiter vorteilhaft je eine Ausprägung diametral je einer Einprägung gegenüber angeordnet ist, wodurch mittels einer handergonomisch günstigen +/- 60° Verdrehung des Werkzeugs stets ein Einführen in eine zugeordnete Werkzeugaufnahme ermöglicht wird.

Vorteilhaft weist jede einzelne Ausprägung einen Ausprägungswinkel kleiner 50° auf, wodurch ein zur Drehmomentübertragung zulässiges Verschleissmass zuerst am Einsteckende durch die über den Ausprägungswinkel konstruktiv schmal festgelegten Ausprägungen überschritten wird, die tangentialen Kontaktflächenpressungen in der Werkzeugaufnahme unterliegen, statt über die zugeordnet breiten Drehmomentübertragungsmittel einer möglichst langlebigen Werkzeugaufnahme.

Vorteilhaft erstrecken sich die Einprägungen und die Ausprägung axial über den gesamten Verriegelungsbereich, wodurch das bei der Umformung aus den Einprägungen verdrängte Material im Wesentlichen radial in die Ausprägung fliest.

Die Erfindung wird bezüglich mehrerer vorteilhafter Ausführungsbeispiele näher erläutert und zwar zeigen:
Fig. 1 a ein Einsteckende in Seitenansicht
Fig. 1b das Einsteckende der Fig. 1 a im Längsschnitt nach Ebene Ib-Ib in Fig. 1 a
Fig. 1c das Einsteckende der Fig. 1 a im Querschnitt nach Ebene Ic-Ic in Fig. 1 b
Fig. 2, Fig. 3, Fig. 4, Fig. 5 und Fig. 6 weitere Ausführungsbeispiele des erfindungsgemässen Einsteckendes, jeweils im Querschnitt und vergrösserter Darstellung

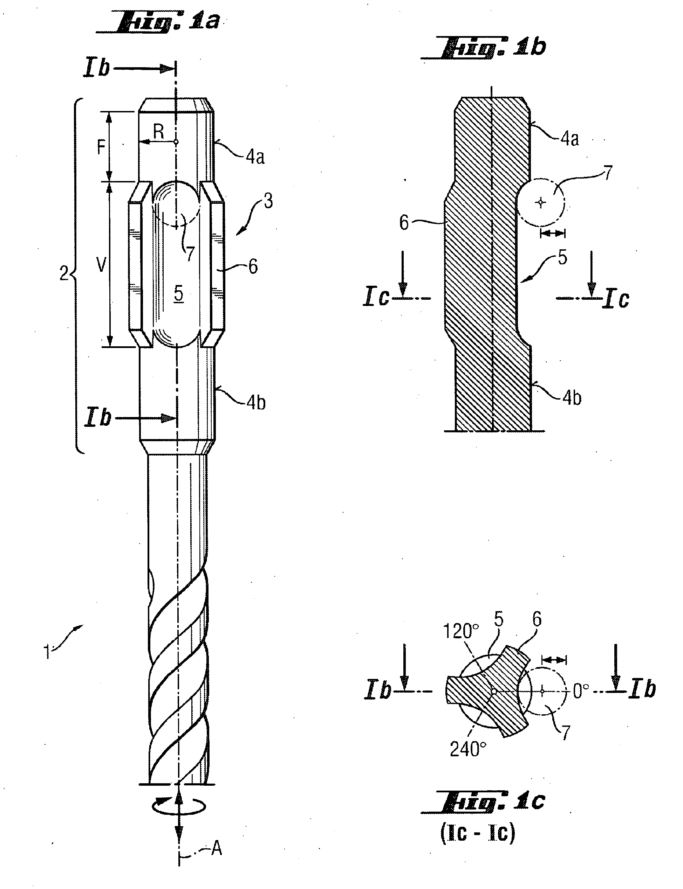

Nach den Fig. 1a, 1b und 1c weist ein längs einer Achse A drehend und schlagend angetriebenes Werkzeug 1 in Form eines Bohrers oder Meissels zum freien Ende hin ein Einsteckende 2 mit einem Radialbezugsmass R und einem axialen Verriegelungsbereich 3 auf. Axial beidseitig zum Verriegelungsbereich 3 sind zwei zylindermantelförmige Führungsflächen 4a, 4b angeordnet, welche sich längs der Achse A mit konstantem Radialbezugsmass R erstrecken und drei innerhalb des axialen Verriegelungsbereiches 3 ausgebildete Einprägungen 5 jeweils axial beidseitig abschliessen. Die zum freien Ende des Einsteckendes 2 hin angeordnete Führungsfläche 4a weist eine axiale Länge F auf, die das doppelte des Radialbezugsmasses R beträgt. Die drei Einprägungen 5 sind bezüglich des Radialbezugsmasses R radial innenliegend, denen umfänglich alternierend abwechselnd benachbart drei radial aussenliegend ausgebildete Ausprägungen 6 zugeordnet sind. In einem Querschnitt Ic-Ic innerhalb des Verriegelungsbereiches 3 sind die drei Einprägungen 5 exakt bei 0°, 120° und 240° angeordnet und bilden mit den sich umfänglich alternierend abwechselnden Ausprägungen 6 eine dreizählige Rotationssymmetrie sowie Spiegelsymmetrie aus. Jeder Ausprägung 6 ist exakt diametral gegenüber je eine Einprägung 5 zugeordnet. Die Einprägungen 5 und die Ausprägung 6 erstrecken sich jeweils axial über den gesamten Verriegelungsbereich 3 der Länge V. Eine zeichnerisch angedeutete, radial versetzbare Verriegelungskugel 7 einer dem Einsteckende 2 passend zugeordneten, zeichnerisch nicht weiter dargestellten, Werkzeugaufnahme greift radial in eine der jeweils axial beidseitig geschlossenen Einprägungen 5 des Verriegelungsbereiches 3 ein und verriegelt das Werkzeug 1 axial.

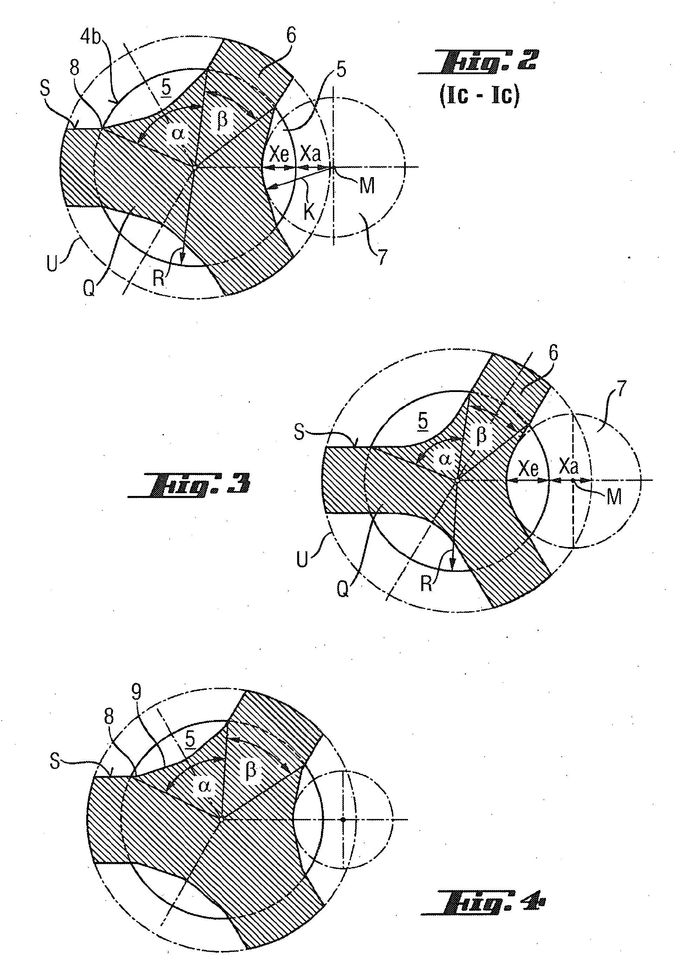

Nach dem Ausführungsbeispiel der Fig. 2 mit kleinen Ausprägungen 6 und flachen Einprägungen 5 für ein Einsteckende mit besonders hoher Schlagenergieübertragung beträgt ein am Radialbezugsmass R der drei Einprägungen 5 aufsummierter zentraler Einprägungswinkel α jeweils 75° und in Summe 225°, sowie ein am Radialbezugsmass R der drei Ausprägungen 6 aufsummierter zentraler Ausprägungswinkel β jeweils 45° und in Summe 135°. Das Verhältnis sowohl der Summen als auch jedes einzelnen der zentralen Einprägungswinkel α zum zentralen Ausprägungswinkel β ergibt somit einen Zahlenwert von 1,66. Das Verhältnis eines jeweils bezüglich des Radialbezugsmasses R bestimmten maximalen Ausprägungsmasses Xa und maximalen Einprägungsmasses Xe ergibt einen Zahlenwert von 1.0 bei jeder der drei Einprägungen 5 und drei Ausprägungen 6. Die Querschnittskontur S der Einprägungen 5 ist leicht konkav gekrümmt, wobei deren minimaler Krümmungsradius K, der dem Radius der eingreifenden Verriegelungskugel 7 entspricht, grösser ist als die Summe aus dem maximalen Ausprägungsmass Xa und dem maximalen Einprägungsmass Xe, da der Mittelpunkt M der maximal eingreifenden Verriegelungskugel 7 ausserhalb eines die Ausprägungen 6 radial aussen begrenzenden Umkreises U liegt. Das Verhältnis der im Querschnitt Ic - Ic ausgebildeten Querschnittsfläche Q zu einer Kreisfläche πR² des Bezugsmasses R ist 0.95. Im Übergang von einer Einprägung 5 zu einer benachbarten Ausprägung 6 weist die Querschnittskontur S einen konkaven Knick 8 auf.

Nach dem in Fig. 3 dargestellten Ausführungsbeispiel mit tiefen Einprägungen 5 und grossen, schmalen Ausprägungen 6 für eine besonders hohe Drehmomentübertragung weist eine im Querschnitt Ic - Ic ausgebildete Querschnittskontur S einen mathematisch glatten, knickfreien Übergang von der Einprägung 5 zur Ausprägung 6 aus. Ein am Radialbezugsmass R der drei Einprägungen 5 aufsummierter zentraler Einprägungswinkel α jeweils 77° und in Summe 231°, sowie ein am Radialbezugsmass R der drei Ausprägungen 6 aufsummierter zentraler Ausprägungswinkel β jeweils 43° und in Summe 129°. Das Verhältnis sowohl der Summen als auch jedes einzelnen der zentralen Einprägungswinkel α zum zentralen Ausprägungswinkel β ergibt somit einen Zahlenwert von 1,79. Das Verhältnis eines jeweils bezüglich des Radialbezugsmasses R bestimmten maximalen Ausprägungsmasses Xa und maximalen Einprägungsmasses Xe ergibt einen Zahlenwert von 1.0 bei jeder der drei Einprägungen 5 und drei Ausprägungen 6.

Nach dem in Fig. 4 dargestellten Ausführungsbeispiel ist der konkave Knick 8 der Querschnittskontur S innerhalb einer schenkelförmig ausgebildeten Einprägung 5 mit geraden Schenkelabschnitten 9 angeordnet.

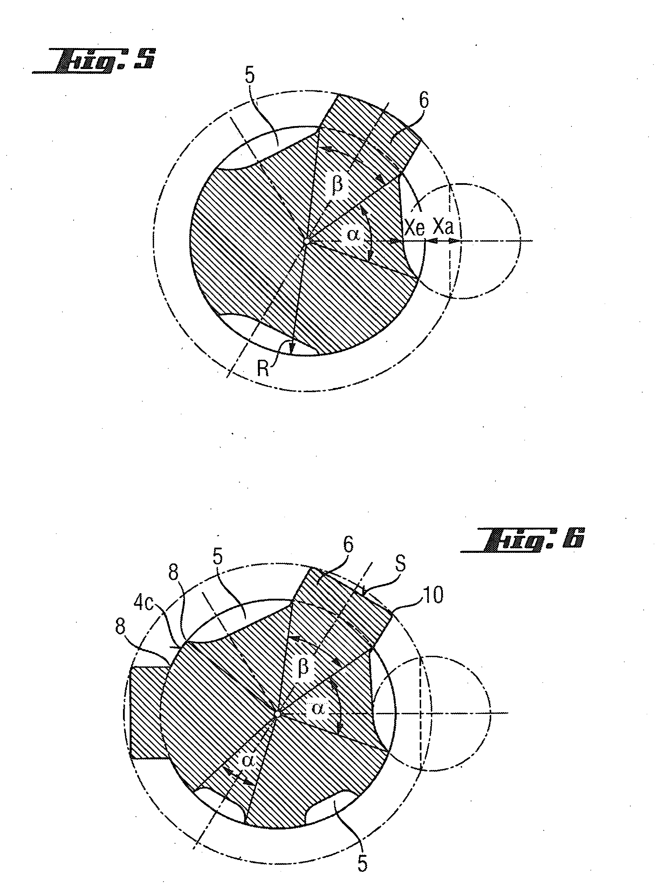

Nach dem in Fig. 5 dargestellten Ausführungsbeispiel weisen die drei gleichartigen, etwas zu 0°, 120° und 240° versetzt eingeprägten, Einprägungen 5 mit einem zentralen Einprägungswinkel α von jeweils 55° keine dreizählige Rotationssymmetrie und keine Spiegelsymmetrie auf. Das Verhältnis des bezüglich des Radialbezugsmasses R bestimmten maximalen Ausprägungsmasses Xa der einzelnen grossen Ausprägung 6 zu den jeweiligen maximalen Einprägungsmassen Xe ergibt einen Zahlenwert von 1.2.

Nach dem in Fig. 6 dargestellten Ausführungsbeispiel sind zwei breite Einprägungen 5 mit einem zentralen Einprägungswinkel α von jeweils 55° sowie zwei schmale Einprägungen 5 mit einem zentralen Einprägungswinkel α von jeweils 30° umfänglich verteilt, die keine dreizählige Rotationssymmetrie und keine Spiegelsymmetrie aufweisen. Eine der beiden Ausprägungen 6 ist zwischen einer schmalen und einer breiten Einprägung 5 angeordnet, wobei zwischen dieser Ausprägung 6 und den beiden umfänglich benachbarten Einprägungen 5 eine axial verlaufende, zylindermantelförmig ausgebildete Führungsfläche 4c mit dem Radialbezugsmass R ausgebildet ist. Die Querschnittskontur S weist am Übergang der Führungsfläche 4c zur Ausprägung 6 einen konkaven Knick 8 sowie zu den Einprägungen 5 jeweils einen konvexen Knick 8 auf. Bei den beiden Ausprägungen 6 ist die radial äussere Querschnittskontur S flach mit abgestumpften Ecken 10 ausgebildet.

## Patentansprüche

1. Einsteckende eines zumindest teilweise längs einer Achse (A) drehend und/oder schlagend angetriebenen Werkzeugs (1) mit einem sich konstant, zumindest teilweise längs der Achse (A) erstreckenden Radialbezugsmass (R), welches durch zwei axial beidseitig zum Verriegelungsbereich (3) angeordnete zylidermantelförmige Führungsflächen (4a, 4b) definiert ist, die sich längs der Achse (A) mit konstantem Radialbezugsmass (R) erstrecken, wobei innerhalb eines Verriegelungsbereiches (3) in einem Querschnitt (Ic) zur Achse (A) mindestens drei, zumindest bei 0°, 120° und 240° innerhalb des Radialbezugsmasses (R) ausgebildete Einprägungen (5), von denen zumindest eine axial zum freien Ende hin geschlossen ist, und ausserhalb des Radialbezugsmasses (R) zumindest eine, umfänglich zwischen zwei benachbarten Einprägungen (5) angeordnete, Ausprägung (6) vorhanden ist, wobei ein im Querschnitt (Ic - Ic) am Radialbezugsmass (R) der Einprägungen (5) aufsummierter zentraler Einprägungswinkel (α) in Summe mindestens 150° beträgt, **dadurch gekennzeichnet, dass** ein im Querschnitt am Radialbezugsmass (R) der Ausprägungen (6) aufsummierter zentralen Ausprägungswinkel (β) in Summe weniger als 150° beträgt und dass deren Summendifferenz zumindest 15° beträgt.

2. Einsteckende nach Anspruch 1, **dadurch gekennzeichnet, dass** der zentrale Einprägungswinkel (α) der mindestens drei Einprägungen (5) jeweils mehr als 60° beträgt.

3. Einsteckende nach Anspruch 1 oder 2, **dadurch gekennzeichnet, dass** das Verhältnis der Summe der zentralen Einprägungswinkel (α) zur Summe der zentralen Ausprägungswinkel (β) einen Zahlenwert im Bereich von 1,2 bis 2.0 ergibt, optional bezüglich jedes Ausprägungswinkels (β) und jedem der mindestens drei Einprägungswinkel (α).

4. Einsteckende nach einem der vorherigen Ansprüche, **dadurch gekennzeichnet, dass** das Verhältnis eines jeweils bezüglich des Radialbezugsmasses (R) bestimmten maximalen Ausprägungsmasses (Xa) und maximalen Einprägungsmasses (Xe) einen Zahlenwert im Bereich von 0.65 bis 1.20 ergibt, optional bezüglich jeder der mindestens drei Einprägungen (5).

5. Einsteckende nach einem der vorherigen Ansprüche, **dadurch gekennzeichnet, dass** das Verhältnis der Querschnittsfläche (Q) zu einer Kreisfläche des Bezugsmasses (R) im Bereich von 0.9 bis 1.0 liegt.

6. Einsteckende nach einem der vorherigen Ansprüche, **dadurch gekennzeichnet, dass** die Querschnittskontur (S) zwischen der Einprägung (5) und der Ausprägung (6) jeweils einen glatten Übergang ausbildet.

7. Einsteckende nach einem der Ansprüche 1 bis 5, **dadurch gekennzeichnet, dass** im Verriegelungsbereich (3) umfänglich zwischen einer Einprägung (5) und einer Ausprägung (6) eine axial verlaufende Führungsfläche (4c) angeordnet ist, welche optional zylindermantelförmig ausgebildet ist.

8. Einsteckende nach einem der vorherigen Ansprüche, **dadurch gekennzeichnet, dass** axial beidseitig zum Verriegelungsbereich (3) angeordnete, axial verlaufende Führungsflächen (4a, 4b) vorhanden sind, welche optional zylindermantelförmig ausgebildet sind.

9. Einsteckende nach Anspruch 8, **dadurch gekennzeichnet, dass** die zum freien Ende hin angeordneten Führungsflächen (4a) eine axiale Länge (F) von mindestens dem 1.0-flachen des Radialbezugsmasses (R) beträgt.

10. Einsteckende nach einem der vorherigen Ansprüche, **dadurch gekennzeichnet, dass** genau drei Einprägungen (5) axial beidseitig geschlossen sind und optional die genau drei Einprägungen (5) umfänglich symmetrisch verteilt sind.

11. Einsteckende nach einem der vorherigen Ansprüche, **dadurch gekennzeichnet, dass** mehrere Ausprägungen (6) vorhanden sind, optional genau drei.

12. Einsteckende nach einem der vorherigen Ansprüche, **dadurch gekennzeichnet, dass** im Querschnitt (Ic) genau drei Einprägungen (5) und genau drei Ausprägungen (6) vorhanden sind, wobei optional je eine Ausprägung (6) diametral je einer Einprägung (5) gegenüber angeordnet ist.

13. Einsteckende nach einem der vorherigen Ansprüche, **dadurch gekennzeichnet, dass** jede einzelne Ausprägung (6) einen zentralen Ausprägungswinkel (β) kleiner 50° aufweist.

14. Einsteckende nach einem der vorherigen Ansprüche, **dadurch gekennzeichnet, dass** sich die Einprägungen (5) und die Ausprägungen (6) axial über den gesamten Verriegelungsbereich (3) erstrecken.

## Claims

1. Shank of a tool (1) that is driven to rotate at least partially about and/or percussively along an axis (A) having a constant radial reference dimension (R) extending along at least part of the axis (A), the radial reference dimension (R) being defined by two cylindrical guide surfaces (4a, 4b) arranged axially to both sides of the locking region (3) and extending longitudinally of the axis (A) with constant radial reference dimension (R), there being within a locking region (3), in a cross section (1c) of the axis (A), at least three recesses (5) formed inwardly of the radial reference dimension (R), at at least 0°. 120°, and 240°, of which at least one is closed axially with respect to the free end, and at least one projection (6) arranged outwardly of the radial reference dimension (R) circumferentially between two neighbouring recesses (5), wherein, the addition sum of the central recess angles (α), within a cross section (1c) at the radial reference dimension (R), amounts in aggregate to at least 150°, **characterised in that** the addition sum of the central projection angles (β), within a cross section at the radial reference dimension (R), amounts in aggregate to less than 150°, and that the difference between the aggregates amounts to at least 15°.

2. Shank according to claim 1, **characterised in that** the central recess angle (α) of the at least three recesses (5) amounts in each case to more than 60°.

3. Shank according to claim 1 or 2, **characterised in that** the ratio of the aggregate of the central recess angles (α) with respect to the aggregate of the central projection angles (β) results in a numerical value in the range of 1.2 to 2.0, optionally with respect to each projection angle (β) and each of the at least three recess angles (α).

4. Shank according to one of the preceding claims, **characterised in that** the ratio of a maximum projection dimension (Xa) determined respectively relatively to the radial reference dimension (R), with respect to a maximum recess dimension (Xe) results in a numerical value in the range of 0.65 to 1.20, optionally with respect to each of the at least three recesses (5).

5. Shank according to one of the preceding claims, **characterised in that** the ratio of the cross sectional area (Q) with respect to a circular area of the reference dimension (R) lies within the range of 0.9 to 1.0.

6. Shank according to one of the preceding claims,
**characterised in that** the cross sectional profile (S) between the recess (5) and the projection (6) is in each case formed as a smooth transition.

7. Shank according to one of claims 1 to 5, **characterised in that**, in the locking region (3), an axially extending guide surface (4c) is arranged circumferentially between a recess (5) and a projection (6), which optionally is formed cylindrically.

8. Shank according to one of the preceding claims, **characterised in that** axially extending guide surfaces (4a, 4b) are provided, arranged axially to both sides of the locking region (3), which optionally are formed cylindrically.

9. Shank according to claim 8, **characterised in that** the guide surfaces (4a) arranged towards the free end, have an axial length (F) amounting to at least 1.0 times the radial reference dimension (R).

10. Shank according to one of the preceding claims, **characterised in that** exactly three recesses (5) are closed axially to both sides, and optionally the exactly three recesses (5) are distributed symmetrically about the circumference.

11. Shank according to one of the preceding claims, **characterised in that** a plurality of projections (6) are provided, optionally exactly three.

12. Shank according to one of the preceding claims, **characterised in that** exactly three recesses (5) and exactly three projections (6) are provided in the cross section (lc), wherein optionally a respective projection (6) is arranged diametrically opposite a respective recess (5).

13. Shank according to one of the preceding claims, **characterised in that** each individual projection (6) has a central projection angle (β) smaller than 50°.

14. Shank according to one of the preceding claims, **characterised in that** the recesses (5) and the projections (6) extend axially along the entire locking region (3).

## Revendications

1. Tige d'outil entraîné en rotation et/ou en percussion (1) au moins partiellement suivant un axe (A), comprenant une dimension radiale de référence (R) qui s'étend de manière constante au moins partiellement le long de l'axe (A) et qui est définie par deux surfaces de guidage en forme d'enveloppes cylindriques (4a, 4b), lesquelles sont disposées axialement de part et d'autre de la zone de verrouillage et s'étendent suivant l'axe (A) avec une dimension radiale de référence constante (R), à l'intérieur d'une zone de verrouillage (3) étant prévues dans une section (Ic) transversale à l'axe (A) au moins trois empreintes en creux (5) qui sont ménagées au moins à 0°, 120° et 240° à l'intérieur de la dimension radiale de référence (R) et dont au moins une est fermée axialement vers l'extrémité libre, et à l'extérieur de la dimension radiale de référence (R) étant prévue au moins une empreinte en relief (6) disposée en périphérie entre deux empreintes en creux (5) voisines, un angle central d'empreinte en creux (α) mesuré dans la section transversale (Ic-Ic) sur la dimension radiale de référence (R) des empreintes en creux (5) étant au total d'au moins 150°, **caractérisée en ce qu'**un angle central d'empreinte en relief (β) mesuré dans la section transversale sur la dimension radiale de référence (R) des empreintes en relief (6) est au total inférieur à 150°, et **en ce que** la différence de leurs sommes est d'au moins 15°.

2. Tige selon la revendication 1, **caractérisée en ce que** l'angle central d'empreinte en creux (α) de chacune des empreintes en creux (5) au nombre d'au moins trois est supérieur à 60°.

3. Tige selon la revendication 1 ou 2, **caractérisée en ce que** le rapport de la somme des angles centraux d'empreintes en creux (α) à la somme des angles centraux d'empreintes en relief (β) correspond à une valeur numérique de l'ordre de 1,2 à 2,0, optionnellement par rapport à chaque angle d'empreinte en relief (β) et chacun des angles d'empreinte en creux (α) au nombre d'au moins trois.

4. Tige selon une des revendications précédentes, **caractérisée en ce que** le rapport d'une dimension maximale d'empreinte en relief (Xa) et d'une dimension maximale d'empreinte en creux (Xe), déterminées chacune par rapport à la dimension radiale de référence (R), correspond à une valeur numérique de l'ordre de 0,65 à 1,20, optionnellement par rapport à chacune des empreintes en creux (5) au nombre d'au moins trois.

5. Tige selon une des revendications précédentes, **caractérisée en ce que** le rapport de l'aire transversale (Q) à une surface circulaire de la dimension de référence (R) est de l'ordre de 0,9 à 1,0.

6. Tige selon une des revendications précédentes, **caractérisée en ce que** le tracé en coupe (S) entre chaque empreinte en creux (5) et chaque empreinte en relief (6) forme une transition douce.

7. Tige selon une des revendications 1 à 5, **caractérisée en ce qu'**une surface de guidage s'étendant axialement (4c) et optionnellement conformée en enveloppe cylindrique est ménagée dans la zone de verrouillage (3), en périphérie, entre une empreinte en creux (5) et une empreinte en relief (6).

8. Tige selon une des revendications précédentes, **caractérisée en ce qu'**il est prévu des surfaces de guidage s'étendant axialement (4a, 4b) qui sont disposées de part et d'autre de la zone de verrouillage (3) et qui sont optionnellement conformées en enveloppes cylindriques.

9. Tige selon la revendication 8, **caractérisée en ce que** les surfaces de guidage (4a) disposées vers l'extrémité libre possèdent une longueur axiale (F) correspondant à au moins 1 fois la dimension radiale de référence (R).

10. Tige selon une des revendications précédentes, **caractérisée en ce qu'**exactement trois empreintes en creux (5) sont fermées axialement des deux côtés et, optionnellement, les exactement trois empreintes en creux (5) sont réparties de manière symétrique en périphérie.

11. Tige selon une des revendications précédentes, **caractérisée en ce que** plusieurs empreintes en relief (6) sont prévues, optionnellement exactement trois.

12. Tige selon une des revendications précédentes, **caractérisée en ce que** dans la section transversale (Ic) sont prévues exactement trois empreintes en creux (5) et exactement trois empreintes en relief (6), optionnellement chaque empreinte en relief (6) étant diamétralement opposée à une empreinte en creux (5).

13. Tige selon une des revendications précédentes, **caractérisée en ce que** chaque empreinte en relief (6) possède un angle central d'empreinte en relief (β) inférieur à 50°.

14. Tige selon une des revendications précédentes, **caractérisée en ce que** les empreintes en creux (5) et les empreintes en relief (6) s'étendent axialement sur la totalité de la zone de verrouillage (3).
